(19) Europäisches Patentamt
European Patent Office
Office européen des brevets

(11) EP 4 123 254 A1

(12) EUROPEAN PATENT APPLICATION
published in accordance with Art. 153(4) EPC

(43) Date of publication:
25.01.2023 Bulletin 2023/04

(51) International Patent Classification (IPC):
F28F 23/02 (2006.01)    C09K 5/06 (2006.01)

(21) Application number: 21771487.2

(52) Cooperative Patent Classification (CPC):
C09K 5/06; F28D 20/02; F28F 23/02; Y02E 60/14

(22) Date of filing: 09.03.2021

(86) International application number:
PCT/JP2021/009160

(87) International publication number:
WO 2021/187220 (23.09.2021 Gazette 2021/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 16.03.2020 JP 2020045192

(71) Applicant: Yazaki Corporation
Minato-ku
Tokyo 108-8333 (JP)

(72) Inventors:
• LEE Sangbae
Susono-shi, Shizuoka 410-1194 (JP)
• MIYASHITA Shigekazu
Susono-shi, Shizuoka 410-1194 (JP)
• MOMOI Takashi
Susono-shi, Shizuoka 410-1194 (JP)

(74) Representative: Grünecker Patent- und
Rechtsanwälte
PartG mbB
Leopoldstraße 4
80802 München (DE)

(54) HEAT-STORAGE MATERIAL COMPOSITION

(57) A heat storage material composition according to an aspect of the present invention includes a main agent mixture composed of calcium chloride hexahydrate, ammonium chloride, and water, wherein when the content of calcium chloride hexahydrate is defined as CA mass%, the content of ammonium chloride is defined as NH mass%, and the content of water is defined as W mass% in 100 mass% of the main agent mixture, parameters X and Y defined by equations (P1) and (P2) below satisfy equations (1) to (5) below.

[Equation 1]

$$X = CA/(CA + W) \qquad (P1)$$

[Equation 2]

$$Y = NH/(CA + NH + W) \qquad (P2)$$

[Equation 3]

$$X - 51.75 > 0 \qquad (1)$$

[Equation 4]

$$52.75 - X > 0 \qquad (2)$$

[Equation 5]

$$4.25 - Y > 0 \qquad (3)$$

[Equation 6]

$$1.2245X + Y - 66.367 > 0 \qquad (4)$$

[Equation 7]

$$-2.1569X + Y + 110.27 > 0 \qquad (5)$$

# FIG. 1

**Description**

TECHNICAL FIELD

The present invention relates to a heat storage material composition.

BACKGROUND ART

Latent heat storage material compositions that utilize the latent heat generated or absorbed during the phase change from liquid to solid or from solid to liquid have been known. Latent heat storage material compositions are used, for example, in heat storage systems for heating and cooling a structure. Hereinafter, the latent heat storage material composition is simply referred to as a "heat storage material composition".

It is desired that heat storage material compositions have a stable and sufficient heat storage effect stably in an intended temperature range. Thus, for example, when a heat storage material composition is used in a heat storage system for heating and cooling a structure, it is desired that the heat storage material composition has a large amount of heat storage and the melting point and solidification point of the heat storage material composition match or approximate conditions of use in the heating and cooling of a structure. Here, the melting point means a temperature at which the heat storage material composition melts in a temperature increasing process, and the solidification point means a temperature at which the heat storage material composition solidifies in a cooling process.

It is desirable that the melting point of the heat storage material composition used in the heat storage system for heating and cooling a structure be 27 °C or lower.

It is preferable that the heat storage material composition used in the heat storage system for heating and cooling a structure have a narrow melting temperature range and a high latent heat of melting in this melting temperature range. Here, the melting temperature range means a temperature range from the start to the end of melting, specifically, a difference $\Delta T$ (= $T_2$ - $T_1$) between "a temperature $T_1$ at which melting of the heat storage material composition begins and a liquid phase begins to occur" and "a temperature $T_2$ at which melting of the heat storage material composition is completed and all of the heat storage material composition becomes liquid phase" in the temperature increasing process. In other words, it is desirable that the heat storage material composition used in a heat storage system for heating and cooling a structure have a high latent heat of melting in a narrow melting temperature range.

As a conventional heat storage material composition, Patent Literature 1 discloses a heat storage material composition made from calcium chloride hexahydrate with ammonium salt such as ammonium chloride, ammonium bromide, or ammonium nitrate.

CITATION LIST

PATENT LITERATURE

Patent Literature 1: Japanese Unexamined Patent Application Publication No. S59-109578

SUMMARY OF INVENTION

TECHNICAL PROBLEM

However, the heat storage material composition of Patent Literature 1 is not suitable for use in a heat storage system for heating and cooling a structure because its melting point exceeds 27 °C. The heat storage material composition of Patent Literature 1 has a wide melting temperature range.

The present invention has been made in consideration of issues such as that described above. An object of the present invention is to provide a heat storage material composition that has a melting point of 27 °C or lower and a high latent heat of melting in a narrow melting temperature range.

SOLUTION TO PROBLEM

A heat storage material composition according to an aspect of the present invention includes a main agent mixture composed of calcium chloride hexahydrate, ammonium chloride, and water, wherein when the content of calcium chloride hexahydrate is defined as CA mass%, the content of ammonium chloride is defined as NH mass%, and the content of water is defined as W mass% in 100 mass% of the main agent mixture, parameters X and Y defined by equations (P1) and (P2) below satisfy equations (1) to (5) below.

[Equation 1]

$$X = CA/(CA + W) \qquad (P1)$$

[Equation 2]

$$Y = NH/(CA + NH + W) \qquad (P2)$$

[Equation 3]

$$X - 51.75 > 0 \qquad (1)$$

[Equation 4]

$$52.75 - X > 0 \qquad (2)$$

[Equation 5]

$$4.25 - Y > 0 \qquad (3)$$

[Equation 6]

$$1.2245X + Y - 66.367 > 0 \qquad (4)$$

[Equation 7]

$$-2.1569X + Y + 110.27 > 0 \qquad (5)$$

BRIEF DESCRIPTION OF DRAWINGS

Fig. 1 is a specific-parameter expressed diagram illustrating compositions of a heat storage material composition using specific parameters.
Fig. 2 is a graph illustrating the supercooling degree of Sample Nos. B1 to B13.
Fig. 3 is a graph illustrating the supercooling degree of Sample Nos. C1 to C23.

DESCRIPTION OF EMBODIMENTS

A detailed description is given below of a heat storage material composition according to the present embodiment.

[Heat storage material composition]

A heat storage material composition according to the present embodiment contains a main agent mixture composed of calcium chloride hexahydrate, ammonium chloride, and water.

(Main agent mixture)

The main agent mixture is composed of calcium chloride hexahydrate, ammonium chloride, and water. Calcium chloride hexahydrate is a heat storage substance. Calcium chloride hexahydrate generally causes a large supercooling phenomenon. Ammonium chloride is a melting point depressant.

<Calcium chloride hexahydrate>

As the calcium chloride hexahydrate ($CaCL_2.6H_2O$), a known compound can be used.

In the heat storage material composition according to the present embodiment, 100 mass% of the main agent mixture contains usually 45.0 to 55.0 mass%, preferably 50.0 to 54.0 mass%, more preferably 51.0 to 53.0 mass%, of calcium chloride hexahydrate. Here, 100 mass% of the main agent mixture means that the total amount of calcium chloride hexahydrate, ammonium chloride, and water is 100 mass%. When the content of calcium chloride hexahydrate is within the above-described ranges, the heat storage material composition easily has a melting point of 27 °C or lower and a high latent heat of melting at 25 to 28 °C inclusive.

<Ammonium chloride>

As the ammonium chloride ($NH_4Cl$), a known compound can be used.

In the heat storage material composition according to the present embodiment, 100 mass% of the main agent mixture contains usually 1.0 to 5.0 mass%, preferably 2.0 to 4.0 mass%, more preferably 2.5 to 3.5 mass%, of ammonium chloride. When the content of ammonium chloride is within the above-described ranges, the heat storage material composition easily has a melting point of 27 °C or lower and a high latent heat of melting at 25 to 28 °C inclusive.

<Water>

As the water, pure water can be used, for example.

In the heat storage material composition according to the present embodiment, 100 mass% of the main agent mixture contalins usually 43.0 to 50.0 mass%, preferably 45.5 to 48.5 mass%, more preferably 46.0 to 48.0 mass%, of water. When the content of water is within the above-described ranges, the heat storage material composition easily has a melting point of 27 °C or lower and a high latent heat of melting at 25 to 28 °C inclusive.

<Composition of heat storage material composition>

A composition of the heat storage material composition is expressed using parameters X and Y defined by the following equations (P1) and (P2) with each content of calcium chloride hexahydrate, ammonium chloride, and water in 100 mass% of the main agent mixture. Specifically, when the content of calcium chloride hexahydrate is defined as CA mass%, the content of ammonium chloride is defined as NH mass%, and the content of water is defined as W mass% in 100 mass% of the main agent, CA, NH, and W are expressed using the parameters X and Y defined by the following equations (P1) and (P2).

[Equation 8]

$$X = CA/(CA + W) \qquad (P1)$$

[Equation 9]

$$Y = NH/(CA + NH + W) \qquad (P2)$$

Preferably, the parameters X and Y satisfy the following equations (1) to (5) because the heat storage material composition easily has a melting point of 27 °C or lower and a high latent heat of melting at 25 to 28 °C inclusive.

[Equation 10]

$$X - 51.75 > 0 \qquad (1)$$

[Equation 11]

$$52.75 - X > 0 \qquad (2)$$

[Equation 12]

$$4.25 - Y > 0 \qquad (3)$$

[Equation 13]

$$1.2245X + Y - 66.367 > 0 \qquad (4)$$

[Equation 14]

$$-2.1569X + Y + 110.27 > 0 \qquad (5)$$

[Specific-parameter expressed diagram]

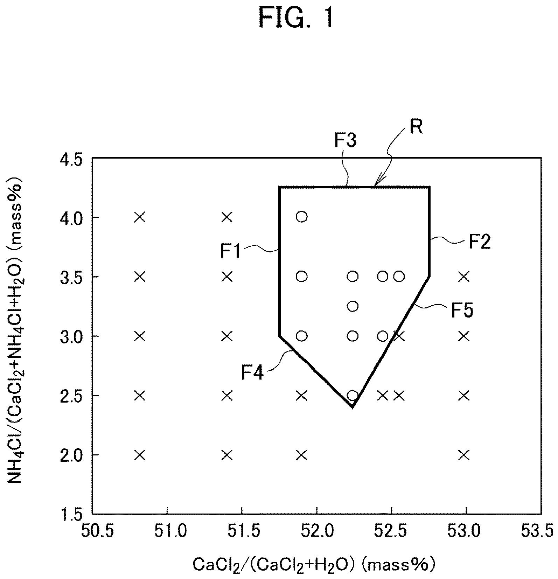

Fig. 1 illustrates a region in which the parameters X and Y satisfy equations (1) to (5). Fig. 1 is a specific-parameter expressed diagram illustrating compositions of the heat storage material composition using specific parameters. In Fig. 1, a pentagonal region satisfying the above-described equations (1) to (5) is denoted by a symbol R. The sides constituting the outer circumference of the pentagon indicated by the symbol R satisfy the above equations (1) to (5) and are denoted as F1 to F5, respectively.

(Supercooling inhibitor)

Preferably, the heat storage material composition according to the present embodiment further includes a supercooling inhibitor because supercooling is further inhibited. The degree of supercooling is expressed in terms of supercooling degree, for example. Here, the supercooling degree means the difference between a solidification point $T_F$ and a supercooling temperature $T_S$ ($T_F \geq T_S$). The supercooling temperature $T_S$ can be measured by means of the surface temperature change of a sample in a thermostatic chamber provided with a temperature measuring resistor.

Examples of the supercooling inhibitor used include at least one selected from the group consisting of strontium chloride hexahydrate, strontium hydroxide octahydrate, barium hydroxide octahydrate, strontium chloride, strontium hydroxide, barium hydroxide, calcium hydroxide, aluminum hydroxide, graphite, aluminum, titanium dioxide, hectorite, smectite clay, bentonite, laponite, propylene glycol, ethylene glycol, glycerin, ethylenediamine tetraacetic acid, sodium alkylsulfate, sodium alkylphosphate, potassium alkylsulfate, and potassium alkylphosphate. Preferably, the supercooling inhibitor is strontium hydroxide octahydrate or strontium hydroxide because supercooling is further inhibited.

Preferably, the heat storage material composition according to the present embodiment contains 100 parts by mass of the main agent mixture and 0.3 to 1.1 parts by mass of strontium hydroxide octahydrate or strontium hydroxide because supercooling is further inhibited. More preferably, the heat storage material composition according to the present embodiment contains 100 parts by mass of the main agent mixture and 0.5 to 1.0 parts by mass of strontium hydroxide octahydrate or strontium hydroxide because the supercooling degree easily falls within the range of 1 to 2.5 °C.

(Supercooling inhibitory additive)

Preferably, the heat storage material composition according to the present embodiment further contains a supercooling inhibitory additive in addition to the supercooling inhibitor because the supercooling is further inhibited.

Examples of the supercooling inhibitory additive used include one or more substances selected from the group consisting of decanoic acid, diatomaceous earth, rayon, octadecane, sodium monododecyl phosphate, 1-propanol, polyester nonwoven fabric, polyester fiber, alumina, bromooctadecane, 2-propanol, and glycerin. Preferably, the supercooling inhibitory additive is made from one or more of the above-described substances because the supercooling degree easily falls within the range of 0.9 to 3.9 °C.

As the polyester nonwoven fabric, Dilla (registered trademark) is used, for example. As the polyester fiber, disintegrated fiber of Dilla is used, for example.

There are certain preferred combinations of the supercooling inhibitor and the supercooling inhibitor additive. For example, when the supercooling inhibitor is strontium hydroxide octahydrate, it is preferable that the supercooling inhibitory additive be one or more substances selected from the group consisting of decanoic acid, diatomaceous earth, rayon, octadecane, sodium monododecyl phosphate, 1-propanol, polyester nonwoven fabric, polyester fiber, and alumina because the supercooling is further inhibited.

Preferably, the heat storage material composition according to the present embodiment contains 100 parts by mass of the main agent mixture, 0.3 to 1.1 parts by mass of strontium hydroxide octahydrate, and 0.4 to 1.1 parts by mass of the supercooling inhibitory additive because the supercooling degree easily falls within the range of 0.9 to 3.9 °C. More preferably, the heat storage material composition according to the present embodiment contains 100 parts by mass of the main agent mixture, 0.5 to 1.0 parts by mass of strontium hydroxide octahydrate, and 0.4 to 1.1 parts by mass of the supercooling inhibitory additive because the supercooling degree more easily falls within the range of 0.9 to 3.9 °C. Even more preferably, the heat storage material composition according to the present embodiment contains 100 parts by mass of the main agent mixture, 0.5 to 1.0 parts by mass of strontium hydroxide octahydrate, and 0.5 to 1.0 parts by mass of the supercooling inhibitory additive because the supercooling degree even more easily falls within the range of 0.9 to 3.9 °C.

When the supercooling inhibitor is strontium hydroxide, it is preferable that the supercooling inhibitory additive be one or more substances selected from the group consisting of octadecane, rayon, bromooctadecane, 1-propanol, alumina, polyester nonwoven fabric, 2-propanol, glycerin, and sodium monododecyl phosphate because supercooling is further inhibited.

Preferably, the heat storage material composition according to the present embodiment contains 100 parts by mass of the main agent mixture, 0.3 to 1.1 parts by mass of strontium hydroxide, and 0.05 to 3.1 parts by mass of the supercooling inhibitory additive because the supercooling degree easily falls within the range of 0.9 to 3.9 °C. More preferably, the heat storage material composition according to the present embodiment contains 100 parts by mass of the main agent mixture, 0.3 to 1.1 parts by mass of strontium hydroxide, and 0.4 to 3.1 parts by mass of the supercooling inhibitory additive because the supercooling degree more easily falls within the range of 0.9 to 3.9 °C. Even more preferably, the heat storage material composition according to the present embodiment contains 100 parts by mass of the main agent mixture, 0.5 to 1.0 parts by mass of strontium hydroxide, and 0.5 to 3.0 parts by mass of the supercooling inhibitory additive because the supercooling degree even more easily falls within the range of 0.9 to 3.9 °C.

(Thickener)

Preferably, the heat storage material composition according to the present embodiment further contains a thickener because the phase separation is inhibited and thus stability of the heat storage performance over a long period of time is improved. Examples of the thickener used include at least one selected from the group consisting of sodium silicate, water glass, polyacrylic acid, sodium polyacrylate, polycarboxylate polyether polymer, acrylic acid-maleic acid copolymer sodium salt, acrylic acid-sulfonic acid based monomer copolymer sodium salt, acrylamide-dimethylaminoethyl methacrylate dimethyl sulfate copolymer, acrylamide-sodium acrylate copolymer, polyethylene glycol, polypropylene glycol, superabsorbent polymer (SAP), carboxymethyl cellulose (CMC), a derivative of CMC, carrageenan, a derivative of carrageenan, xanthan gum, a derivative of xanthan gum, pectin, a derivative of pectin, starch, a derivative of starch, konjac, agar, layered silicate, and a compound substance of one or more of these substances.

(Melting point depressant)

The heat storage material composition according to the present embodiment can further lower the melting point of the heat storage material composition by further containing a melting point depressant. Preferably, the heat storage material composition further contains the melting point depressant because it becomes easy to adjust the melting point of the heat storage material composition to match or approximate the optimum melting point of the heat storage system. Examples of the melting point depressant used include at least one selected from the group consisting of sodium chloride, potassium chloride, sodium nitrate, sodium bromide, ammonium chloride, ammonium bromide, ammonium sulfate, ammonium nitrate, ammonium phosphate, and urea.

(Property)

The heat storage material composition according to the present embodiment has a melting point of 27 °C or lower and a latent heat of melting of 165 J/g or more at 25 to 28 °C inclusive.

In this embodiment, the melting point was measured by a differential scanning calorimeter (DSC). Specifically, for an endothermic peak at the time of melting measured by the DSC, an intersection point of a baseline on the melting start side with a tangent at a point of inflection on the melting start side of the peak was determined, and the temperature at this intersection point was taken as the melting point.

In the present embodiment, the latent heat of melting at 25 to 28 °C inclusive was measured by the DSC. Specifically, for the endothermic peak at the time of melting measured by the DSC, the latent heat of melting calculated by means of integration at 25 to 28 °C inclusive was defined as the latent heat of melting at 25 to 28 °C inclusive.

EXAMPLES

The present embodiment is described in more detail with reference to examples and comparative examples, but the present embodiment is not limited to these examples.

[Example 1]

(Preparation of heat storage material composition)

Calcium chloride hexahydrate (CaCl$_2$ · 6H$_2$O, manufactured by KISHIDA CHEMICAL Co.,Ltd., guaranteed reagent), ammonium chloride (NH$_4$Cl, manufactured by KISHIDA CHEMICAL Co.,Ltd., guaranteed reagent), and pure water were mixed in predetermined amounts to make a total of about 5 g. The amounts of calcium chloride hexahydrate, ammonium chloride, and pure water were combined in such a way that the heat storage material composition to be obtained would have a composition in Table 1. When the obtained mixture was warmed in hot water at 50 °C or higher, a heat storage material composition was obtained (Sample No. A13).
The heat storage material composition consists of calcium chloride hexahydrate, ammonium chloride, and pure water and thus consists only of what is also referred to as the main agent mixture.

[Table 1]

| Experimental example No. | Sample No. | Heat storage material composition (mass%) Main agent mixture | | | Parameters | | Material properties | | |
|---|---|---|---|---|---|---|---|---|---|
| | | CaCl₂·6H₂O | NH₄Cl | H₂O | X $CaCl_2/(CaCl_2+H_2O)$ | Y $NH_4Cl/(CaCl_2+NH_4Cl+H_2O)$ | Latent heat of melting at 25 to 28°C (J/g) | Melting point (°C) | Symbols in figures |
| Comparative Example 1 | A1 | 49.8 | 2.00 | 48.2 | 50.8 | 2.0 | 142.4 | 25.9 | × |
| Comparative Example 2 | A2 | 49.6 | 2.50 | 48.0 | 50.8 | 2.5 | 153.2 | 24.9 | × |
| Comparative Example 3 | A3 | 49.3 | 3.00 | 47.7 | 50.8 | 3.0 | 146.7 | 25.3 | × |
| Comparative Example 4 | A4 | 49.0 | 3.50 | 47.5 | 50.8 | 3.5 | 137.9 | 25.0 | × |
| Comparative Example 5 | A5 | 48.8 | 4.00 | 47.2 | 50.8 | 4.0 | 136.0 | 25.0 | × |
| Comparative Example 6 | A6 | 50.4 | 2.00 | 47.6 | 51.4 | 2.0 | 156.8 | 26.0 | × |
| Comparative Example 7 | A7 | 50.1 | 2.50 | 47.4 | 51.4 | 2.5 | 162.3 | 25.8 | × |
| Comparative Example 8 | A8 | 49.9 | 3.00 | 47.1 | 51.4 | 3.0 | 156.9 | 25.7 | × |
| Comparative Example 9 | A9 | 49.6 | 3.50 | 46.9 | 51.4 | 3.5 | 149.5 | 25.7 | × |
| Comparative Example 10 | A10 | 49.3 | 4.00 | 46.7 | 51.4 | 4.0 | 140.6 | 25.6 | × |
| Comparative Example 11 | A11 | 50.9 | 2.00 | 47.1 | 51.9 | 2.0 | 158.4 | 25.9 | × |
| Comparative Example 12 | A12 | 50.6 | 2.50 | 46.9 | 51.9 | 2.5 | 161.1 | 25.9 | × |
| Example 1 | A13 | 50.3 | 3.00 | 46.7 | 51.9 | 3.0 | 182.8 | 26.1 | ○ |
| Example 2 | A14 | 50.1 | 3.50 | 46.4 | 51.9 | 3.5 | 173.7 | 26.0 | ○ |

| Experimental example No. | Sample No. | Heat storage material composition (mass%) | | | Parameters | | Material properties | | |
|---|---|---|---|---|---|---|---|---|---|
| | | Main agent mixture | | | X | Y | Latent heat of melting at 25 to 28°C (J/g) | Melting point (°C) | Symbols in figures |
| | | $CaCl_2$ ∙ $6H_2O$ | $NH_4Cl$ | $H_2O$ | $CaCl_2/(CaCl_2+H_2O)$ | $NH_4Cl/(CaCl_2+NH_4Cl+H_2O)$ | | | |
| Example 3 | A15 | 49.8 | 4.00 | 46.2 | 51.9 | 4.0 | 165.5 | 25.9 | ○ |
| Example 4 | A16 | 50.9 | 2.50 | 46.6 | 52.2 | 2.5 | 187.2 | 25.9 | ○ |
| Example 5 | A17 | 50.7 | 3.00 | 46.3 | 52.2 | 3.0 | 177.0 | 26.0 | ○ |
| Example 6 | A18 | 50.5 | 3.25 | 46.2 | 52.2 | 3.3 | 173.7 | 25.9 | ○ |
| Example 7 | A19 | 50.4 | 3.50 | 46.1 | 52.2 | 3.5 | 168.5 | 25.8 | ○ |
| Comparative Example 13 | A20 | 51.1 | 2.50 | 46.4 | 52.4 | 2.5 | 160.3 | 25.9 | × |
| Example 8 | A21 | 50.9 | 3.00 | 46.1 | 52.4 | 3.0 | 165.7 | 25.9 | ○ |
| Example 9 | A22 | 50.6 | 3.50 | 45.9 | 52.4 | 3.5 | 172.5 | 25.8 | ○ |
| Comparative Example 14 | A23 | 51.2 | 2.50 | 46.3 | 52.6 | 2.5 | 150.2 | 26.3 | × |
| Comparative Example 15 | A24 | 51.0 | 3.00 | 46.0 | 52.6 | 3.0 | 161.9 | 25.9 | × |
| Example 10 | A25 | 50.7 | 3.50 | 45.8 | 52.6 | 3.5 | 166.0 | 25.7 | ○ |
| Comparative Example 16 | A26 | 51.9 | 2.00 | 46.1 | 53.0 | 2.0 | 142.9 | 25.8 | × |
| Comparative Example 17 | A27 | 51.7 | 2.50 | 45.8 | 53.0 | 2.5 | 153.1 | 25.9 | × |
| Comparative Example 18 | A28 | 51.4 | 3.00 | 45.6 | 53.0 | 3.0 | 158.3 | 26.0 | × |
| Comparative Example 19 | A29 | 51.1 | 3.50 | 45.4 | 53.0 | 3.5 | 159.7 | 25.9 | × |

The content of calcium chloride hexahydrate is defined as CA mass%, the content of ammonium chloride is defined as NH mass%, and the content of water is defined as W mass% in 100 mass% of the main agent mixture, and parameters X and Y are calculated using the following equations (P1) and (P2). The results are shown in Table 1.
[Equation 15]

$$X = CA/(CA + W) \qquad (P1)$$

[Equation 16]

$$Y = NH/(CA + NH + W) \qquad (P2)$$

The obtained parameters X and Y satisfy the following equations (1) to (5).
[Equation 17]

$$X - 51.75 > 0 \qquad (1)$$

[Equation 18]

$$52.75 - X > 0 \qquad (2)$$

[Equation 19]

$$4.25 - Y > 0 \qquad (3)$$

[Equation 20]

$$1.2245X + Y - 66.367 > 0 \qquad (4)$$

[Equation 21]

$$-2.1569X + Y + 110.27 > 0 \qquad (5)$$

(Specific-parameter expressed diagram)

Moreover, the obtained parameters X and Y are shown in Fig. 1. Fig. 1 is a specific-parameter expressed diagram illustrating compositions of the heat storage material composition using specific parameters. In Fig. 1, a pentagonal region satisfying the above-described equations (1) to (5) is denoted by the symbol R. The sides constituting the outer circumference of the pentagon indicated by the symbol R satisfy the above equations (1) to (5) and are denoted as F1 to F5, respectively.
The composition of the heat storage material composition of Sample No. A13 was plotted in Fig. 1. In Fig. 1, plots existing in the pentagonal region R satisfying the above equations (1) to (5) are denoted by a symbol ∘, and plots existing outside the region R not satisfying the above equations (1) to (5) are denoted by a symbol ×. The plot of the heat storage material composition of A13 is denoted by the symbol o.

(Measurement of melting point)

An amount of 20 mg of the heat storage material composition was collected, and thermal analysis by the differential scanning calorimeter (DSC) was performed. For the obtained endothermic peak at the time of melting, an intersection point of a baseline on the melting start side with a tangent at a point of inflection on the melting start side of the peak was determined, and the temperature at this intersection point was taken as the melting point.

(Measurement of latent heat of melting at 25 to 28 °C inclusive)

For the endothermic peak at the time of melting obtained by the DSC, the latent heat of melting calculated by means of integration at 25 to 28 °C inclusive was defined as the latent heat of melting at 25 to 28 °C inclusive.

These results are shown in Table 1.

[Example 2 to 10, Comparative Example 1 to 19]

The amount of each component added was adjusted in such a way that the heat storage material composition to be obtained would have a composition in Table 1, and the heat storage material composition was prepared by the same procedure as in Example 1 (Sample Nos. A1 to A12 and A14 to A29).

(Specific-parameter expressed diagram)

Compositions of the heat storage material composition of Sample Nos. A1 to A12 and A14 to A29 were plotted in Fig. 1 in the same manner as in Example 1.

The melting point, and latent heat of melting at 25 to 28 °C inclusive of Sample Nos. A1 to A12 and A14 to A29 were measured in the same manner as in Example 1. The results are shown in Table 1.

From Table 1 and Fig. 1, it is seen that experimental examples plotted in the region of the symbol R satisfying all of the above equations (1) to (5) and denoted by the symbol ∘ have a melting point of 27 °C or lower and a high latent heat of melting at 25 to 28 °C inclusive.

[Example 11 to 23]

(Preparation of heat storage material composition)

First, the main agent mixture of Example 2 (Sample No. A14) was prepared. Strontium hydroxide octahydrate $Sr(OH)_2 \cdot 8H_2O$ (manufactured by FUJIFILM Wako Pure Chemical Corporation) was prepared as a supercooling inhibitor.

Next, 100 parts by mass of the main agent mixture of A14, $Sr(OH)_2 \cdot 8H_2O$, and as necessary a supercooling inhibitory additive were mixed in the amounts shown in Table 2, and the heat storage material composition was prepared (Sample Nos. B1 to B13).

The supercooling inhibitory additives shown in Table 2 are as follows.

- Decanoic acid: manufactured by KISHIDA CHEMICAL Co.,Ltd.
- Diatomaceous earth: manufactured by FUJIFILM Wako Pure Chemical Corporation, average particle size 50 μm
- Rayon: manufactured by UNITIKA LTD., fiber diameter 1 mm, fiber length 10 mm
- Octadecane: manufactured by FUJIFILM Wako Pure Chemical Corporation
- Sodium monododecyl phosphate: manufactured by Tokyo Chemical Industry Co., Ltd.
- 1-Propanol: manufactured by KISHIDA CHEMICAL Co.,Ltd.
- Dilla (nonwoven fabric): manufactured by UNITIKA LTD., polyester nonwoven fabric Dilla (registered trademark)
- Dilla disintegrated fiber: manufactured by UNITIKA LTD., disintegrated fiber of polyester nonwoven fabric Dilla (registered trademark)
- Alumina: alumina powder manufactured by KISHIDA CHEMICAL Co.,Ltd.

[Table 2]

| Experimental example No. | Sample No. | Heat storage material composition | | | | | | Additive | | Material properties | |
|---|---|---|---|---|---|---|---|---|---|---|---|
| | | Main agent mixture (mass%) | | | Parts by mass | Supercooling inhibitor | | Supercooling inhibitory additive | | Melting point (°C) | Supercooling degree (°C) |
| | | $CaCl_2 \cdot 6H_2O$ | $NH_4Cl$ | $H_2O$ | | Type | Parts by mass | Type | Parts by mass | | |
| Example 11 | B1 | 50.1 | 3.50 | 46.4 | 100 | $Sr(OH)_2 \cdot 8H_2O$ | 1.0 | - | - | 24.9 | 2.1 |
| Example 12 | B2 | 50.1 | 3.50 | 46.4 | 100 | $Sr(OH)_2 \cdot 8H_2O$ | 0.7 | - | - | 25.0 | 2.3 |
| Example 13 | B3 | 50.1 | 3.50 | 46.4 | 100 | $Sr(OH)_2 \cdot 8H_2O$ | 0.5 | - | - | 25.0 | 2.0 |
| Example 14 | B4 | 50.1 | 3.50 | 46.4 | 100 | $Sr(OH)_2 \cdot 8H_2O$ | 1.0 | Decanoic acid | 0.5 | 24.9 | 1.2 |
| Example 15 | B5 | 50.1 | 3.50 | 46.4 | 100 | $Sr(OH)_2 \cdot 8H_2O$ | 1.0 | Diatomaceous earth | 1.0 | 24.5 | 2.2 |
| Example 16 | B6 | 50.1 | 3.50 | 46.4 | 100 | $Sr(OH)_2 \cdot 8H_2O$ | 1.0 | Rayon | 1.0 | 24.4 | 1.5 |
| Example 17 | B7 | 50.1 | 3.50 | 46.4 | 100 | $Sr(OH)_2 \cdot 8H_2O$ | 1.0 | Decanoic acid | 1.0 | 24.3 | 1.1 |
| Example 18 | B8 | 50.1 | 3.50 | 46.4 | 100 | $Sr(OH)_2 \cdot 8H_2O$ | 1.0 | Octadecane | 0.5 | 24.5 | 0.9 |
| Example 19 | B9 | 50.1 | 3.50 | 46.4 | 100 | $Sr(OH)_2 \cdot 8H_2O$ | 1.0 | Sodium monododecyl phosphate | 1.0 | 24.2 | 1.3 |
| Example 20 | B10 | 50.1 | 3.50 | 46.4 | 100 | $Sr(OH)_2 \cdot 8H_2O$ | 1.0 | 1-propanol | 0.5 | 24.7 | 1.5 |
| Example 21 | B11 | 50.1 | 3.50 | 46.4 | 100 | $Sr(OH)_2 \cdot 8H_2O$ | 1.0 | Dilla (non-woven fabric) | 1.0 | 24.9 | 1.8 |
| Example 22 | B12 | 50.1 | 3.50 | 46.4 | 100 | $Sr(OH)_2 \cdot 8H_2O$ | 1.0 | Dilla disintegrated fiber | 1.0 | 24.9 | 1.0 |
| Example 23 | B13 | 50.1 | 3.50 | 46.4 | 100 | $Sr(OH)_2 \cdot 8H_2O$ | 1.0 | Alumina | 1.0 | 24.0 | 1.9 |

The melting points of Sample Nos. B1 to B13 were measured in the same manner as in Example 1.

The supercooling degree was measured as follows.

(Measurement of supercooling degree)

The supercooling temperature was measured by means of the surface temperature change of a sample in a thermostatic chamber provided with a temperature measuring resistor. The supercooling degree was calculated by subtracting the supercooling temperature from the melting point.

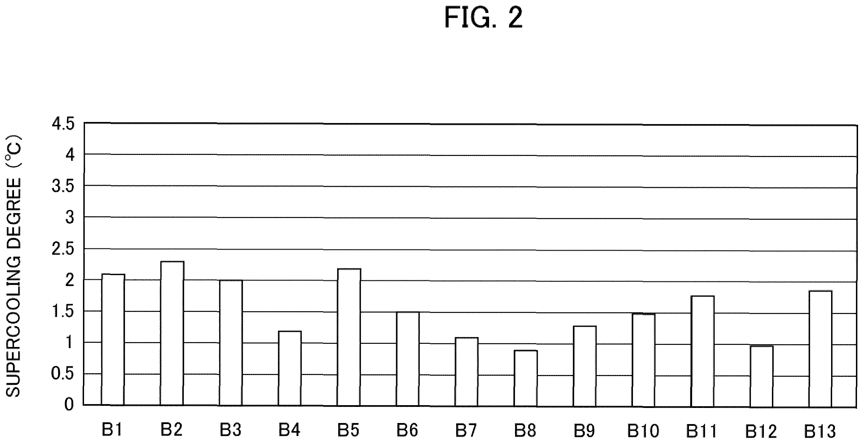

The results are shown in Table 2 and Fig. 2.

[Examples 24 to 44, Comparative Examples 20 and 21]

(Preparation of heat storage material composition)

First, the main agent mixture of Example 2 (Sample No. A14) was prepared. Strontium hydroxide $Sr(OH)_2$ (manufactured by FUJIFILM Wako Pure Chemical Corporation) was prepared as the supercooling inhibitor.

Next, 100 parts by mass of the main agent mixture of A14, $Sr(OH)_2$, and as necessary a supercooling inhibitory additive were mixed in the amounts shown in Table 3, and the heat storage material composition was prepared (Sample No. C1 to C23).

The supercooling inhibitory additives shown in Table 3 are as follows.

- Octadecane: manufactured by FUJIFILM Wako Pure Chemical Corporation
- Rayon: manufactured by UNITIKA LTD., fiber diameter 1 mm, fiber length 10 mm
- Diatomaceous earth: manufactured by FUJIFILM Wako Pure Chemical Corporation, average particle size 50 $\mu$m
- Bromooctadecane: manufactured by KISHIDA CHEMICAL Co.,Ltd.
- 1-Propanol: manufactured by KISHIDA CHEMICAL Co.,Ltd.
- Alumina: alumina powder manufactured by KISHIDA CHEMICAL Co.,Ltd.
- Dilla (nonwoven fabric): manufactured by UNITIKA LTD., polyester nonwoven fabric Dilla (registered trademark)
- 2-Propanol: manufactured by KISHIDA CHEMICAL Co.,Ltd.
- Glycerin: manufactured by KISHIDA CHEMICAL Co.,Ltd.
- Sodium monododecyl phosphate: manufactured by Tokyo Chemical Industry Co., Ltd.
- $MgCl_2$: magnesium chloride manufactured by KISHIDA CHEMICAL Co.,Ltd.

[Table 3]

| Experimental example No. | Sample No. | Heat storage material composition | | | | Supercooling inhibitor | | Additive | | Material properties | |
|---|---|---|---|---|---|---|---|---|---|---|---|
| | | Main agent mixture (mass%) | | | | | | Supercooling inhibitory additive | | | |
| | | CaCl₂·6H₂O | NH₄Cl | H₂O | Parts by mass | Type | Parts by mass | Type | Parts by mass | Melting point (°C) | Supercooling degree (°C) |
| Example 24 | C1 | 50.1 | 3.50 | 46.4 | 100 | Sr(OH)₂ | 1.0 | - | - | 24.9 | 2.5 |
| Example 25 | C2 | 50.1 | 3.50 | 46.4 | 100 | Sr(OH)₂ | 0.7 | - | - | 25.0 | 2.2 |
| Example 26 | C3 | 50.1 | 3.50 | 46.4 | 100 | Sr(OH)₂ | 0.5 | - | - | 25.0 | 1.0 |
| Example 27 | C4 | 50.1 | 3.50 | 46.4 | 100 | Sr(OH)₂ | 1.0 | Octadecane | 0.5 | 24.9 | 1.0 |
| Example 28 | C5 | 50.1 | 3.50 | 46.4 | 100 | Sr(OH)₂ | 1.0 | Rayon | 1.0 | 24.8 | 1.5 |
| Example 29 | C6 | 50.1 | 3.50 | 46.4 | 100 | Sr(OH)₂ | 1.0 | Diatomaceous earth | 1.0 | 24.8 | 1.5 |
| Example 30 | C7 | 50.1 | 3.50 | 46.4 | 100 | Sr(OH)₂ | 1.0 | Bromooctadecane | 1.0 | 24.8 | 1.5 |
| Example 31 | C8 | 50.1 | 3.50 | 46.4 | 100 | Sr(OH)₂ | 0.5 | 1-propanol | 1.0 | 24.9 | 1.2 |
| Example 32 | C9 | 50.1 | 3.50 | 46.4 | 100 | Sr(OH)₂ | 1.0 | Alumina | 3.0 | 24.5 | 1.9 |
| Example 33 | C10 | 50.1 | 3.50 | 46.4 | 100 | Sr(OH)₂ | 1.0 | Octadecane | 0.1 | 24.9 | 1.0 |
| Example 34 | C11 | 50.1 | 3.50 | 46.4 | 100 | Sr(OH)₂ | 1.0 | Dilla (non-woven fabric) | 1.0 | 24.8 | 2.0 |
| Example 35 | C12 | 50.1 | 3.50 | 46.4 | 100 | Sr(OH)₂ | 1.0 | 2-propanol | 0.5 | 24.9 | 1.8 |

(continued)

| Experimental example No. | Sample No. | Heat storage material composition | | | | | | Additive | | Material properties | |
|---|---|---|---|---|---|---|---|---|---|---|---|
| | | Main agent mixture (mass%) | | | Parts by mass | Supercooling inhibitor | | Supercooling inhibitory additive | | Melting point (°C) | Supercooling degree (°C) |
| | | $CaCl_2 \cdot 6H_2O$ | $NH_4Cl$ | $H_2O$ | | Type | Parts by mass | Type | Parts by mass | | |
| Example 36 | C13 | 50.1 | 3.50 | 46.4 | 100 | $Sr(OH)_2$ | 1.0 | Alumina | 1.0 | 24.8 | 1.3 |
| Example 37 | C14 | 50.1 | 3.50 | 46.4 | 100 | $Sr(OH)_2$ | 1.0 | 1-propanol | 0.5 | 24.9 | 1.1 |
| Example 38 | C15 | 50.1 | 3.50 | 46.4 | 100 | $Sr(OH)_2$ | 1.0 | Glycerin | 0.5 | 24.9 | 2.2 |
| Example 39 | C16 | 50.1 | 3.50 | 46.4 | 100 | $Sr(OH)_2$ | 1.0 | 1-propanol | 2.0 | 24.8 | 2.1 |
| Example 40 | C17 | 50.1 | 3.50 | 46.4 | 100 | $Sr(OH)_2$ | 1.0 | Sodium monododecyl phosphate | 0.5 | 24.7 | 1.8 |
| Example 41 | C18 | 50.1 | 3.50 | 46.4 | 100 | $Sr(OH)_2$ | 1.0 | Glycerin | 1.0 | 24.7 | 2.4 |
| Example 42 | C19 | 50.1 | 3.50 | 46.4 | 100 | $Sr(OH)_2$ | 1.0 | 2-propanol | 1.0 | 24.8 | 1.7 |
| Example 43 | C20 | 50.1 | 3.50 | 46.4 | 100 | $Sr(OH)_2$ | 1.0 | 2-propanol | 2.0 | 24.6 | 1.7 |
| Comparative Example 20 | C21 | 50.1 | 3.50 | 46.4 | 100 | $Sr(OH)_2$ | 1.0 | $MgCl_2$ | 1.0 | 24.5 | 3.9 |
| Example 44 | C22 | 50.1 | 3.50 | 46.4 | 100 | $Sr(OH)_2$ | 1.0 | Glycerin | 2.0 | 24.6 | 2.3 |
| Comparative Example 21 | C23 | 50.1 | 3.50 | 46.4 | 100 | $Sr(OH)_2$ | 1.0 | $MgCl_2$ | 2.0 | 24.2 | 3.8 |

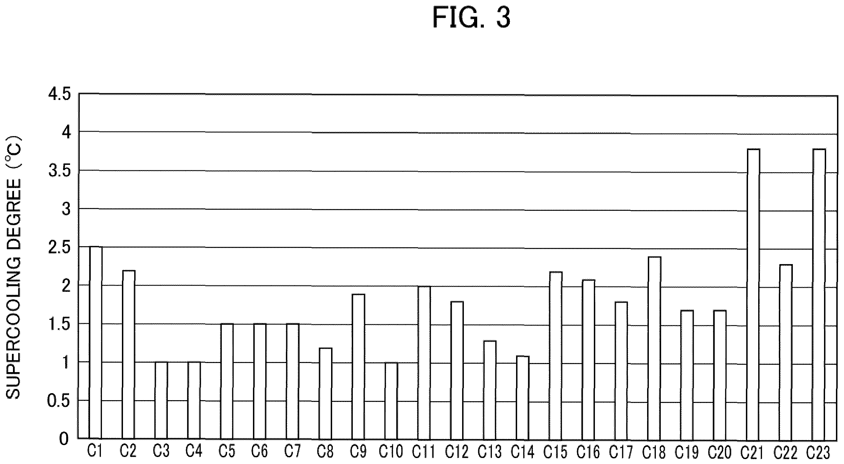

The melting point and supercooling degree of Sample Nos. Cl to C23 were measured in the same manner as in Example 24. The results are shown in Table 3 and Fig. 3.

From Table 2, when 1% of strontium hydroxide octahydrate $Sr(OH)_2 \cdot 8H_2O$ was added to the heat storage material composition, the supercooling degree was found to be 2.1 °C. When each of the additives and strontium hydroxide octahydrate were combined and added to the heat storage material composition, the supercooling degree was found to be 0.9 to 1.9 °C. In particular, when 0.5% of octadecane and 1.0 parts by mass of strontium hydroxide octahydrate were added to the heat storage material composition in combination, the supercooling degree was found to be 0.9 to 1.9 °C.

From Table 3, when 1% of strontium hydroxide $Sr(OH)_2$ was added to the heat storage material composition, the supercooling degree was found to be 2.5 °C. When each of the additives and strontium hydroxide were combined and added to the heat storage material composition, the supercooling degree was found to be 1 to 3.9 °C.

The entire contents of Japanese Patent Application No. 2020-045192 (filed on March 16, 2020) are incorporated herein by reference.

Although the present embodiment has been described above, the present embodiment is not limited thereto, and various modifications are possible within the scope of the gist of the present embodiment.

INDUSTRIAL APPLICABILITY

The present invention is capable of providing a heat storage material composition having a melting point of 27 °C or less and a high latent heat of melting in a narrow melting temperature range. Note that the above-described latent heat of melting in the narrow melting temperature range was specifically defined as the latent heat of melting at 25 to 28 °C inclusive.

**Claims**

1. A heat storage material composition, comprising:

   a main agent mixture composed of calcium chloride hexahydrate, ammonium chloride, and water, wherein when a content of calcium chloride hexahydrate is defined as CA mass%, a content of ammonium chloride is defined as NH mass%, and a content of water is defined as W mass% in 100 mass% of the main agent mixture, parameters X and Y defined by equations (P1) and (P2) below satisfy equations (1) to (5) below.

   [Equation 1]

   $$X=CA/(CA+W) \qquad (P1)$$

   [Equation 2]

   $$Y=NH/(CA+NH+W) \qquad (P2)$$

   [Equation 3]

   $$X-51.75>0 \qquad (1)$$

   [Equation 4]

   $$52.75-X>0 \qquad (2)$$

   [Equation 5]

   $$4.25-Y>0 \qquad (3)$$

[Equation 6]

$$1.2245X + Y - 66.367 > 0 \qquad (4)$$

[Equation 7]

$$-2.1569X + Y + 110.27 > 0 \qquad (5)$$

2. The heat storage material composition according to claim 1, wherein the heat storage material composition has a melting point of 27 °C or lower and a latent heat of melting of 165 J/g or more at 25 to 28 °C inclusive.

3. The heat storage material composition according to claim 1 or 2, wherein 100 mass% of the main agent mixture contains 45.0 to 55.0 mass% of calcium chloride hexahydrate, 1.0 to 5.0 mass% of ammonium chloride, and 43.0 to 50.0 mass% of water.

4. The heat storage material composition of any one of claims 1 to 3, further comprising: at least one supercooling inhibitor selected from the group consisting of strontium chloride hexahydrate, strontium hydroxide octahydrate, barium hydroxide octahydrate, strontium chloride, strontium hydroxide, barium hydroxide, calcium hydroxide, aluminum hydroxide, graphite, aluminum, titanium dioxide, hectorite, smectite clay, bentonite, laponite, propylene glycol, ethylene glycol, glycerin, ethylenediamine tetraacetic acid, sodium alkylsulfate, sodium alkylphosphate, potassium alkylsulfate, and potassium alkylphosphate.

5. The heat storage material composition according to any one of claims 1 to 4, further comprising: at least one thickener selected from the group consisting of sodium silicate, water glass, polyacrylic acid, sodium polyacrylate, polycarboxylate polyether polymer, acrylic acid-maleic acid copolymer sodium salt, acrylic acid-sulfonic acid based monomer copolymer sodium salt, acrylamide-dimethylaminoethyl methacrylate dimethyl sulfate copolymer, acrylamide-sodium acrylate copolymer, polyethylene glycol, polypropylene glycol, superabsorbent polymer (SAP), carboxymethyl cellulose (CMC), a derivative of CMC, carrageenan, a derivative of carrageenan, xanthan gum, a derivative of xanthan gum, pectin, a derivative of pectin, starch, a derivative of starch, konjac, agar, layered silicate, and a compound substance of one or more of these substances.

6. The heat storage material composition according to any one of claims 1 to 5, further comprising: at least one melting point depressant selected from the group consisting of sodium chloride, potassium chloride, sodium nitrate, sodium bromide, ammonium chloride, ammonium bromide, ammonium sulfate, ammonium nitrate, ammonium phosphate, and urea.

7. The heat storage material composition according to any one of claims 4 to 6, wherein the supercooling inhibitor is strontium hydroxide octahydrate or strontium hydroxide.

8. The heat storage material composition according to claim 7, wherein the heat storage material composition contains 100 parts by mass of the main agent mixture and 0.3 to 1.1 parts by mass of strontium hydroxide octahydrate or strontium hydroxide.

9. The heat storage material composition according to any one of claims 4 to 8, further comprising:
a supercooling inhibitory additive.

10. The heat storage material composition according to claim 9, wherein the supercooling inhibitor is strontium hydroxide octahydrate, and
the supercooling inhibitory additive is at least one substance selected from the group consisting of decanoic acid, diatomaceous earth, rayon, octadecane, sodium monododecyl phosphate, 1-propanol, polyester nonwoven fabric, polyester fiber, and alumina.

11. The heat storage material composition according to claim 10, wherein the heat storage material composition contains 100 parts by mass of the main agent mixture, 0.3 to 1.1 parts by mass of strontium hydroxide octahydrate, and 0.4 to 1.1 parts by mass of the supercooling inhibitory additive.

**12.** The heat storage material composition according to claim 9, wherein the supercooling inhibitor is strontium hydroxide, and

the supercooling inhibitory additive is at least one substance selected from the group consisting of octadecane, rayon, bromooctadecane, 1-propanol, alumina, polyester nonwoven fabric, 2-propanol, glycerin, and sodium monododecyl phosphate.

**13.** The heat storage material composition according to claim 12, wherein the heat storage material composition contains 100 parts by mass of the main agent mixture, 0.3 to 1.1 parts by mass of strontium hydroxide, and 0.05 to 3.1 parts by mass of the supercooling inhibitory additive.

# FIG. 1

FIG. 2

EP 4 123 254 A1

FIG. 3

EP 4 123 254 A1

## INTERNATIONAL SEARCH REPORT

| International application No. |
| --- |
| PCT/JP2021/009160 |

**A. CLASSIFICATION OF SUBJECT MATTER**

Int. Cl. F28F23/02(2006.01)i, C09K5/06(2006.01)i
FI: C09K5/06 B, F28F23/02 D

According to International Patent Classification (IPC) or to both national classification and IPC

**B. FIELDS SEARCHED**

Minimum documentation searched (classification system followed by classification symbols)
Int. Cl. F28F23/02, F28D20/02, C09K5/00-5/20

Documentation searched other than minimum documentation to the extent that such documents are included in the fields searched
Published examined utility model applications of Japan   1922-1996
Published unexamined utility model applications of Japan   1971-2021
Registered utility model specifications of Japan   1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2019/172149 A1 (KANEKA CORP.) 12 September 2019, claims 1, 7-9, 12, paragraphs [0001], [0030]-[0036], [0047], [0053]-[0059], [0070], [0078]-[0081], examples 1-7, 11, table 1 | 1-13 |
| A | CN 107556972 A (QINGHAI INSTITUTE SALT LAKES CAS) 09 January 2018, claims 1, 3-5, 7-8, paragraph [0001], examples 1, 2 | 1-13 |
| A | JP 5-500523 A (THE AUSTRALIAN NATIONAL UNIVERSITY) 04 February 1993, claims 1-7, p. 3, lower left column, line 8 to p. 4, lower left column, line 17 | 1-13 |

☒ Further documents are listed in the continuation of Box C.  ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 11.05.2021 | 25.05.2021 |

| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2021/009160 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2000-351963 A (MIZUTANI, Koji) 19 December 2000, claims 1-10, paragraphs [0001], [0026]-[0033], fig. 6 | 1-13 |
| A | JP 58-215480 A (HITACHI, LTD.) 14 December 1983, claims 1-4, p. 2, upper right column, line 5 to p. 3, upper right column, line 2 | 1-13 |
| A | Microfilm of the specification and drawings annexed to the request of Japanese Utility Model Application No. 121293/1982 (Laid-open No. 26614/1984) (UNO, Masami) 18 February 1984, claims, p. 1, line 9 to p. 2, line 5 | 1-13 |

Form PCT/ISA/210 (continuation of second sheet) (January 2015)

| INTERNATIONAL SEARCH REPORT | International application No. |
| :-- | :-- |
| Information on patent family members | PCT/JP2021/009160 |

| Patent Documents referred to in the Report | Publication Date | Patent Family | Publication Date |
| :-- | :-- | :-- | :-- |
| WO 2019/172149 A1 | 12.09.2019 | (Family: none) | |
| CN 107556972 A | 09.01.2018 | (Family: none) | |
| JP 5-500523 A | 04.02.1993 | WO 1991/000324 A1 claims 1-7, p. 6, line 10 to p. 11, line 17 EP 478637 A1 KR 10-1992-0702712 A | |
| JP 2000-351963 A | 19.12.2000 | US 6469085 B1 claims 1-5, column 1, lines 7-13, Column 5, line 12 to column 6, line 6, fig. 6 EP 1184439 A1 CN 1343241 A KR 10-2002-0004960 A | |
| JP 58-215480 A | 14.12.1983 | (Family: none) | |
| JP 59-26614 U1 | 18.02.1984 | (Family: none) | |

Form PCT/ISA/210 (patent family annex) (January 2015)

**EP 4 123 254 A1**

**REFERENCES CITED IN THE DESCRIPTION**

**Patent documents cited in the description**

- JP S59109578 A
- JP 2020045192 A